# EUROPEAN PATENT SPECIFICATION

(11) **EP 3 834 583 B1**
(45) Date of publication and mention of the grant of the patent: **11.03.2026**
(21) Application number: 18756168.3
(22) Date of filing: 08.08.2018
(51) Int. Cl.: H04W 76/10

(54) **MAPPING LOGICAL NETWORK RESOURCES TO TRANSPORT RESOURCES**
ZUORDNUNG LOGISCHER NETZWERKRESSOURCEN ZU TRANSPORTRESSOURCEN
MAPPAGE DE RESSOURCES DE RÉSEAU LOGIQUE POUR TRANSPORTER DES RESSOURCES

(43) Date of publication of application: 16.06.2021
(73) Proprietor: Nokia Technologies Oy, 02610 Espoo (FI)
(72) Inventor: GODIN, Philippe, 78000 Versailles (FR); THIEBAUT, Laurent, 96120 Antony (FR)
(74) Representative: Nokia EPO representatives
(86) International application number: PCT/EP2018/071526
(87) International publication number: WO 2020/030265

(56) References cited:
- US-A1- 2017 317 894
- "5G; NG-RAN; E1 Application Protocol (E1AP) (3GPP TS 38.463 version 15.0.0 Release 15)", vol. 3GPP RAN, no. V15.0.0, 5 July 2018 (2018-07-05), pages 1 - 129, XP014330518, Retrieved from the Internet <URL:http://www.etsi.org/deliver/etsi_ts/138400_138499/138463/15.00.00_60/ts_138463v150000p.pdf> [retrieved on 20180705]

## Description

### TECHNICAL FIELD

Some embodiments relate to mapping logical network resources, e.g. a network slice and/or DNN (Data Network Name) according to 3GPP, to transport resources in a communication network system.

### BACKGROUND

In current 5G specifications, slicing is defined allowing any entity operating a network based on 3GPP technology to define virtual mobile networks (hereafter referred to also as "3GPP slices") that can be accessed over a shared access (e.g. radio) interface.

US 2017/317894 discloses a method and a system for providing access to Quality of Service levels from within a network to entities outside of the network.

Publication "5G; NG-RAN; E1 Application Protocol (E1AP) (3GPP TS 38.463 version 15.0.0 Release 15)" discloses a signaling protocol for E1 interface of the 3GPP 5G radio access network.

### LIST OF ABBREVIATIONS

- 3GPP: 3^{rd} Generation Partnership Project
- 5G: 5^{th} Generation
- 5G-AN 5G: Access Network
- 5GC: 5G Core Network
- AMF: Access and Mobility Management Function
- AN: Access Network
- CN: Core Network
- CP: Control Plane
- CPCNF: Core Network Function in Control Plane
- CU: Central Unit
- DNN: Data Network Name
- FAR: Forwarding Action Rule
- gNB: Node B of NG (R)AN
- GPRS: General Packet Radio Service
- GTP-u: GPRS Tunneling Protocol for the user plane
- ID: Identifier, Identification
- IE: Information Element
- IP: Internet Protocol
- L2: Layer 2
- N3IWFNon-3GPP: InterWorking Function
- NG: Next Generation
- NGAP: NG Application Protocol
- PDR: Packet Detection Rule
- PDU: Packet Data Unit
- PLMN: Public Land Mobile Network
- RAN: Radio Access Network
- SM: Session Management
- SMF: SM Function
- S-NSSAI: Single Network Slice Selection Assistance Information
- TEID: Tunnel Endpoint Identifier
- UE: User Equipment
- UP: User Plane
- UPCNF: Core Network Function in User Plane
- UPF: User Plane Function
- VPN: Virtual Private Network

### SUMMARY

Examples of embodiments address how to map logical network resources, e.g. 3GPP slices, into transport resources to be used e.g. on an N3 user plane (UP) interface between a 5GC and an NG AN, e.g. an NG RAN.

According to examples of embodiments, methods, apparatuses and non-transitory computer readable media are provided as defined in the appended claims. The invention is defined by the independent claims, and embodiments are defined in the dependent claims.

According to an aspect of the disclosure, mapping of PDU session resources onto transport resources for the user plane in a network slicing scenario can be optimized.

According to an aspect of the disclosure, by providing a network instance information element (IE) over an E1 interface towards a CU-UP, a CU-CP enables to leverage control plane information it has for a UE into determination of optimized transport user plane resources, e.g. L2 technology, VPN.

According to an aspect of the disclosure, by sending a network instance IE over NGAP to a 5G-AN, an SMF is able to send same network instance IE to
CU-CP that it sends to the UPF terminating the N3 interface with that 5G-AN, so that the CU-CP can take it into account when determining the network instance IE to be sent over E1, e.g. the CU-CP includes over E1 the same network instance or a relevant (e.g. derived) network instance, enabling CU-UP and UPF to apply compatible user plane traffic resource choices, e.g. L2 technology, VPN, etc., for the selection of the user plane interface (N3) they will use to carry the user plane of the UE's session.

In the following, examples of embodiments will be described with reference to the accompanying drawings.

### BRIEF DESCRIPTION OF THE DRAWINGS

Fig. 1 shows a schematic block diagram illustrating an architecture in which examples of embodiments are implementable.
Fig. 2 shows a schematic block diagram illustrating a configuration of control units in which examples of embodiments are implementable.
Figs. 3A, 3B and 3C show flowcharts illustrating processes according to examples of embodiments.

### DESCRIPTION OF THE EMBODIMENTS

In a core network of a communication network system, which complies e.g. with 5G, an SMF maps a slice identification of a network slice, e.g. an S-NSSAI and/or a DNN (Data Network Name) of a PDU session to a network instance parameter provided to a UPF of the core network over an N4 interface. The SMF may provide the network instance parameter to the UPF in an FAR and/or PDR via N4 session establishment or modification procedures.

It is noted that a network slice comprises a logical network that provides specific network capabilities and network characteristics. A network slice is defined within a PLMN and includes core network control plane and user plane network functions, and, in a serving PLMN, at least one of an NG radio access network and N3IWF functions to a non-3GPP access network.

It is further noted that a PDU session comprises an association between a UE and a data network that provides a PDU connectivity service.

It is further noted that a PDU Session belongs to a specific network slice instance per PLMN and allows access to a specific data network identified by a data network name (DNN). Usually, different network slice instances do not share a PDU session, though different slices may have slice-specific PDU sessions using same data network name (DNN).

It is noted that a network slice instance comprises a set of network function instances and the required resources (e.g. compute, storage and networking resources) which form a deployed network slice.

Further, a 5G access network (5G-AN) comprises an access network comprising a NG-RAN and/or non-3GPP AN connecting to a 5G core network. The 5G-AN that contains the CU-CP and the CU-UP may correspond to a gNB, an ng-eNB, an N3IWF or any Access Network function that be connected to a 5GC. In some cases (e.g. in case the 5G-AN corresponds to the N3IWF) the CU-CP and the CU-UP may be collocated.

It is noted that a network instance comprises information identifying a domain, and is used by the UPF for traffic detection and routing. A network instance can be defined e.g. to separate IP domains, e.g. when a UPF is connected to 5G-ANs in different IP domains, overlapping UE IP addresses assigned by multiple data networks, transport network isolation in the same PLMN, etc.

The SMF may determine the network instance for N3, N9 and N6 interfaces, based on e.g. UE location, registered PLMN ID of UE, S-NSSAI of the PDU Session, DNN, etc.

It is noted that, as an example, the UPF can use the network instance included in the FAR, together with other information such as outer header creation (IP address part) and destination interface in the FAR, to determine the interface in UPF (e.g. VPN or Layer 2 technology) for forwarding of traffic.

The UPF can then locally map the network instance received on N4 to transport layer resources to be used to exchange user plane traffic for this PDU session, e.g. over an N3 interface.

In case an NG-RAN node is split into CU-CP and CU-UP, the CU-UP cannot benefit from control plane information available at the CU-CP to determine optimized transport user plane resources to be used for the traffic of the UE corresponding to a slice.

It is noted that the "CU-CP" represents any CP entity of an access network, e.g. NG (R)AN, like a gNB, terminating the N2 (CP) interface with the 5GC. For example, the CU-CP comprises a 3GPP gNB-CU-CP. The "CU-UP" represents any UP entity of an access network, e.g. NG (R)AN, like the gNB, terminating the N3 (UP) interface with the 5GC. For example, the CU-UP comprises a 3GPP gNB-CU-UP.

As described above, the decision of how traffic of a slice may be mapped onto N3 transport resources (e.g. VPN, L2 technology) is taken by the SMF based on information available in the 5GC and not available in the 5G-AN such as UE location, DNN, etc. Therefore, the 5G-AN node (even CU-CP when 5G-AN node is split) may not make an optimal decision on transport resources.

Further, the decision of how traffic of a slice may be mapped onto N3 transport resources (e.g. VPN, L2 technology) should also be consistent between the UPF at the 5GC endpoint of the N3 interface e.g. comprising ingress and egress of N3 tunnel, and the CU-UP at the 5G-AN endpoint of the N3 interface comprising e.g. egress and ingress of the N3 tunnel.

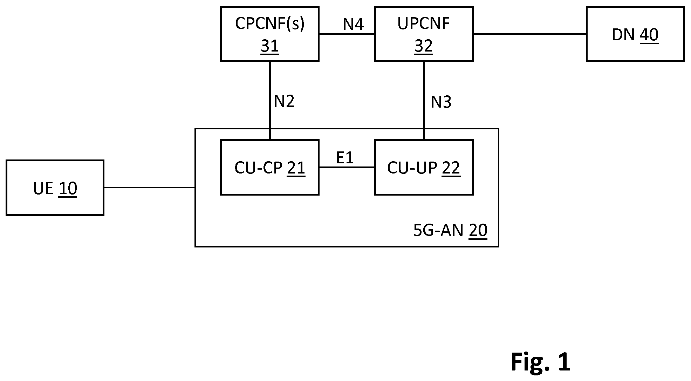

Now reference is made to Fig. 1 showing a schematic block diagram illustrating an architecture in which examples of embodiments are implementable.

The architecture depicts a UE 10, a 5G-AN 20 comprising a CU-CP 21 and a CU-UP 22, a set of core network functions in the control plane (CPCNF(s)) 31, a core network function in the user plane (UPCNF) 32, and a data network DN 40. The CU-CP 21 and the CU-UP 22 are connected via an E1 interface, the CU-CP 21 and the CPCNF(s) 31 are connected via an N2 interface, the CU-UP 22 and the UPCNF are connected via an N3 interface, and the CPCNF(s) 31 and the UPCNF 32 are connected via an N4 interface.

According to an example implementation, the 5G-AN 20 is an access network e.g. an NG RAN, etc. of a communication network system.

According to an example implementation, the CU-CP 21 and the CU-UP 22 are entities of a gNB.

According to an example implementation, the CPCNF(s) 31 and the UPCNF 32 are entities of a core network, e.g. a 5GC.

According to an example implementation, the CPCNF(s) 31 comprises at least an AMF (Access and Mobility Management Function) and an SMF (Session Management Function) and the UPCNF 32 comprises a UPF.

According to an example implementation, the UE 10 and the DN 40 are associated via a PDU session.

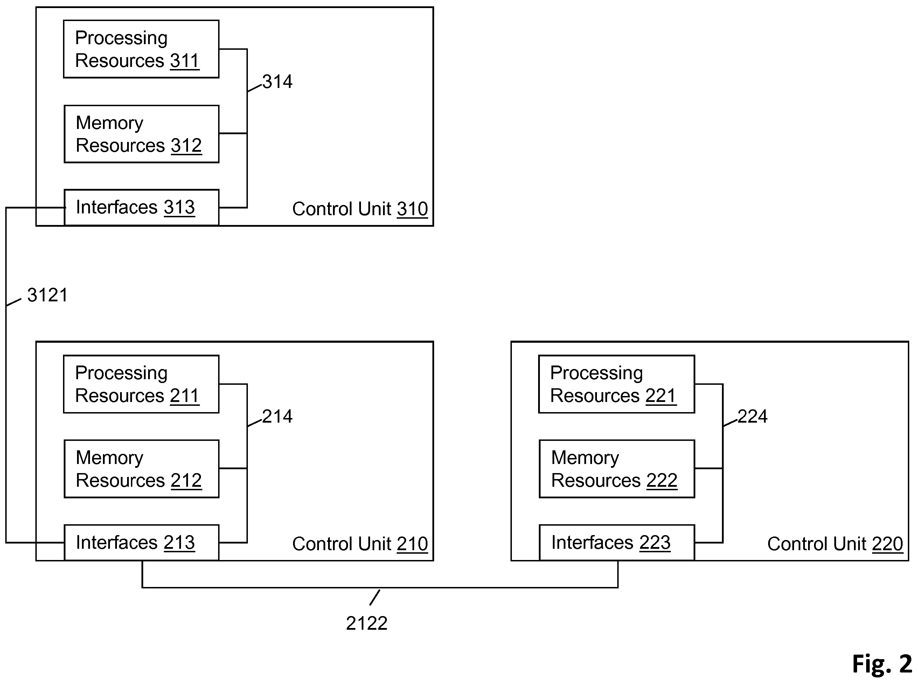

As a preliminary matter before exploring details of various implementations, reference is made to Fig. 2 for illustrating a simplified block diagram of control units that are suitable for use in practicing some examples of embodiments.

A control unit 210 comprises processing resources (e.g. processing circuitry) 211, memory resources (e.g. memory circuitry) 212 and interfaces (e.g. interface circuitry) 213 coupled via a connection 214. The control unit 210 may be part of and/or used by the CU-CP 21 shown in Fig. 1.

A control unit 220 shown in Fig. 2 comprises processing resources (e.g. processing circuitry) 221, memory resources (e.g. memory circuitry) 222 and interfaces (e.g. interface circuitry) 223 coupled via a connection 224. The control unit 220 may be part of and/or used by the CU-UP 22 shown in Fig. 1.

A control unit 310 shown in Fig. 2 comprises processing resources (e.g. processing circuitry) 311, memory resources (e.g. memory circuitry) 312 and interfaces (e.g. interface circuitry) 313 coupled via a connection 314. The control unit 310 may be part of and/or used by the CPCNF 31 shown in Fig. 1.

As illustrated in Fig. 2, the control unit 210 and the control unit 220 are coupled via a connection 2122, e.g. the E1 interface shown in Fig. 1.

As illustrated in Fig. 2, the control unit 210 and the control unit 310 are coupled via a connection 3121, e.g. the N2 interface shown in Fig. 1.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

Examples of embodiments may be implemented by computer software stored in the memory resources 212, 222, 312 and executable by the corresponding processing resources 211, 221, 311, or by hardware, or by a combination of software and/or firmware and hardware in any or all of the devices shown.

Further, as used in this application, the term "circuitry" refers to one or more or all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

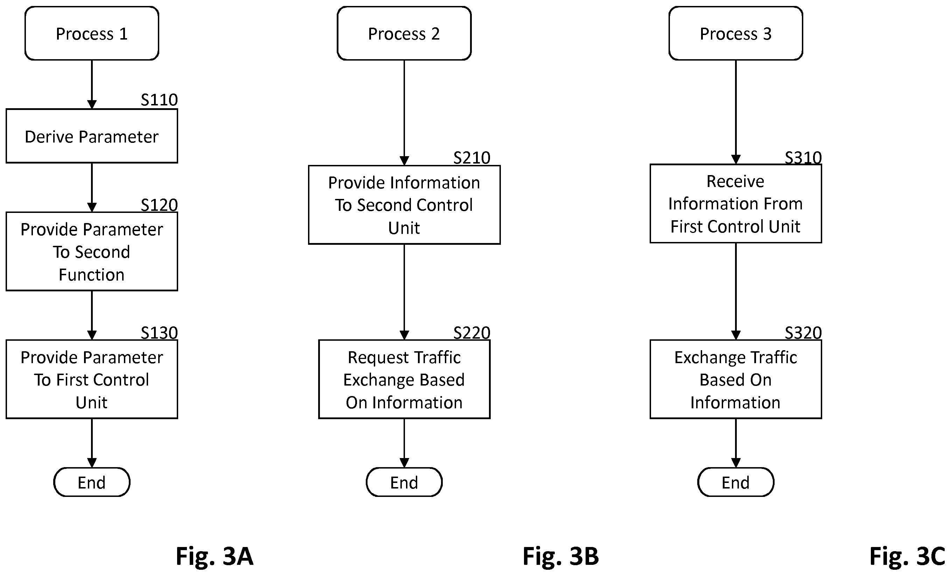

Now reference is made to Figs. 3A, 3B and 3C showing flowcharts illustrating processes according to examples of embodiments.

Fig. 3A illustrates a process 1 which may be performed by a first function of a core network of a communication network system, the first function operating in a control plane, e.g. by the CPCNF(s) 31 (e.g. SMF) shown in Fig. 1.

In step S110, a parameter relating to transport resources for a user plane is derived from an identification relating to logical network resources of a session between a user equipment (e.g. the UE 10 of Fig. 1) and a data network (e.g. the DN 40 of Fig. 1). A slice ID of a PDU session is mapped to a network instance parameter.

In step S120, the parameter (e.g. the network instance parameter) is provided to a second function of the core network and the second function is requested to exchange user plane traffic for the session based on the parameter, wherein the second function operates in the user plane and derives the transport resources for the session based on the parameter. For example, the network instance parameter is provided to the UPCNF 32 (e.g. UPF) over the N4 interface.

The UPCNF 32 can then locally map the parameter (e.g. network instance parameter) received on the N4 interface to transport layer resources to be used to exchange user plane traffic for this PDU session e.g. over the N3 interface.

In step S130, the parameter (e.g. the network instance parameter) is provided to a first control unit (e.g. the CU-CP 21 shown in Fig. 1) of an access network of the communication network system, wherein the access network provides access for the user equipment to the communication network system and the first control unit operates in the control plane. For example, the SMF sends the network instance parameter it has determined and sent to the UPF also over N2 interface to the CU-CP 21.

According to an example implementation, the parameter is forwarded in the control plane in a container from the first function (e.g. SMF) to the first control unit of the 5G-AN via a third function (e.g. an AMF) of the core network, the third function operating in the control plane, wherein the container is passed over a first interface (e.g. the N2 interface) between the third function and the first control unit transparently for the third function.

Alternatively or in addition, the parameter is forwarded in the control plane (the control plane of the first interface) together with other information of user plane resources to be used for the session wherein these user plane resources are used on a second interface (e.g. N3 interface) between the second function and a second control unit (e.g. CU-UP 22) of the access network, and wherein the second control unit is operating in the user plane.

For example, the SMF provides a GTP address (GTP-u TEID + IP address) of N3 resources for the PDU session (PDU Session Resource Setup Request Transfer IE), in the control plane in an N2 SM container that is passed transparently via AMF, and can alternatively or additionally forward the network instance parameter together inside the same container. So, according to an example implementation, the information exchanged is from SMF to gNB, while the information is blindly relayed by AMF. Therefore it is one of the advantages to use the N2 interface instead of the N3 interface for forwarding the network instance parameter to the access network.

After the processing in step S130, process 1 ends.

It is noted that the order of steps S120 and S130 may be interchanged or the steps may be performed in parallel.

Fig. 3B illustrates a process 2 which may be performed by a first control unit of an access network of a communication network system, wherein the access network provides access for a user equipment to the communication network system and the first control unit operates in a control plane, e.g. by the CU-CP 21 shown in Fig. 1.

In step S210, information is provided to a second control unit (e.g. the CU-UP 22 shown in Fig. 1) of the access network, wherein the information relates to transport resources for the user plane of a session between the user equipment and a data network, wherein the second control unit operates in the user plane, and wherein the transport resources relate to a logical transport network to use to carry the user plane of the session. For example, the logical transport network is the user plane part of a network slice.

In step S220, the second control unit is requested to exchange user plane traffic for the session over transport resources derived from the information. After the processing in step S220 process 2 ends.

In an example where the above information relates to a network instance parameter, when asking for 5G AN UP resources for a PDU session, the CU-CP 21 provides over the E1 interface a network instance parameter to the CU-UP 22. The CU-UP 22 can then locally map the network instance parameter received on the E1 interface to transport layer resources to be used to exchange user plane traffic for this PDU session e.g. over the N3 interface.

The information relating to transport resources provided from the first control unit to the second control unit is the same as the parameter obtained by the first control unit from the first function in process 1. According to another example implementation, the information is derived from that parameter.

Fig. 3C illustrates a process 3 which may be performed by a second control unit (e.g. the CU-UP 22 shown in Fig. 1) of an access network of a communication network system, wherein the access network provides access for a user equipment to the communication network system and the second control unit operates in a user plane.

In step S310, information is received from a first control unit (e.g. the CU-CP 21 of Fig. 1) of the access network, wherein the information relates to transport resources for the user plane for a session between the user equipment and a data network, wherein the first control unit operates in the control plane, and wherein the transport resources relate to logical network resources of the session.

In step S320, the transport resources to be used for the session over the user plane are derived based on the received information, and user plane traffic for the session is exchanged over the derived transport resources. After the processing in step S320, process 3 ends.

For example, the CU-UP 22 locally maps a network instance parameter received on the E1 interface to transport layer resources to be used to exchange user plane traffic for a PDU session e.g. over the N3 interface.

According to an example implementation, in order to help a CU-UP entity (e.g. CU-UP 22) and UPF entity (e.g. UPCNF 32) make determination of the same/consistent transport resources (e.g. VPN, L2 technology, etc..) to be used to exchange user plane traffic for a PDU session of a network slice, an SMF entity (part of CPCNF(s) 31) sends a network instance parameter it has determined and sent to the UPF entity also (via the AMF) over N2 interface to a CU-CP entity (e.g. CU-CP 21), for further delivery of same network instance parameter or derived network instance parameter to the CU-UP entity over E1 interface.

According to a first aspect, an apparatus is provided for implementing a first function of a core network of a communication network system, the first function operating in a control plane. For example, the first function comprises the CPCNF(s) 31 illustrated in Fig. 1.

According to an example implementation, the apparatus of the first aspect comprises the control unit 310 illustrated in Fig. 2. The apparatus may execute process 1 illustrated in Fig. 3A.

The apparatus of the first aspect comprises means for deriving a parameter relating to transport resources for a user plane from an identification relating to logical network resources of a session between a user equipment and a data network, means for
providing the parameter to a second function of the core network and requesting the second function of the core network to exchange user plane traffic for the session based on the parameter, wherein the second function operates in the user plane and derives the transport resources for the session based on the parameter, and means for providing the parameter to a first control unit of an access network of the communication network system, wherein the access network provides access for the user equipment to the communication network system and the first control unit of the access network operates in the control plane.

According to an example implementation, the means for providing comprises means for forwarding the parameter in the control plane in a container from the first function of the core network to the first control unit of the access network via a third function of the core network, the third function of the core network operating in the control plane, wherein the container is passed over a first interface between the third function of the core network and the first control unit of the access network transparently for the third function of the core network.

In addition or according to another example implementation, the means for providing comprises means for forwarding the parameter in the control plane together with other information of user plane resources to be used for the session wherein these user plane resources are used on a second interface between the second function and a second control unit of the access network, and wherein the second control unit operates in the user plane.

According to a second aspect, an apparatus is provided for implementing a first control unit of an access network of a communication network system, wherein the access network provides access for a user equipment to the communication network system and the first control unit operates in a control plane. For example, the first control unit comprises the CU-CP 21 illustrated in Fig. 1.

According to an example implementation, the apparatus of the second aspect comprises the control unit 210 illustrated in Fig. 2. The apparatus may execute process 2 illustrated in Fig. 3B.

The apparatus of the second aspect comprises means for providing information to a second control unit of the access network, wherein the information relates to transport resources for a user plane for a session between the user equipment and a data network, wherein the second control unit operates in the user plane, and wherein the transport resources relate to a logical transport network to use to carry the user plane of the session, and means for requesting the second control unit to exchange user plane traffic for the session over transport resources derived from said information.

According to an example implementation, the apparatus of the second aspect further comprises means for acquiring a parameter from a first function of a core network of the communication network system, the first function operating in the control plane, wherein the parameter relates to an identification relating to logical network resources of the session, and means for deriving the information from the parameter.

According to an example implementation, the means for acquiring comprises means for receiving the parameter from the first function via a third function of the core network in the control plane in a container, the third function operating in the control plane, wherein the container is received over a first interface between the third function and the first control unit transparently for the third function.

In addition or according to another example implementation, the means for acquiring comprises means for receiving the parameter in the control plane together with other information of user plane resources to be used for the session, wherein these user plane resources are used on a second interface between a second function of the core network and the second control unit of the access network, and wherein the second function operates in the user plane and derives the transport resources for the session based on the parameter.

According to a third aspect an apparatus is provided for implementing a second control unit of an access network of a communication network system, wherein the access network provides access for a user equipment to the communication network system and the second control unit operates in a user plane. For example, the second control unit comprises the CU-UP 22 illustrated in Fig. 1.

According to an example implementation, the apparatus of the third aspect comprises the control unit 220 illustrated in Fig. 2. The apparatus may execute process 3 illustrated in Fig. 3C.

The apparatus of the third aspect comprises means for receiving information from a first control unit of the access network, wherein the information relates to transport resources for the user plane for a session between the user equipment and a data network, wherein the first control unit operates in the control plane, and wherein the transport resources relate to logical network resources of the session, and means for deriving, based on the received information, the transport resources to be used for the session over the user plane, and exchanging user plane traffic for the session over the derived transport resources.

According to some embodiments, a control plane function (e.g. CPCNF(s)) of a core network of a communication network system derives a parameter relating to transport resources for a user plane from an identification relating to logical network resources of a session between a user equipment and a data network, and provides the parameter to a user plane function (e.g. UPCNF) of the core network and to a control plane control unit (e.g. CU-CP) of an access network of the communication network system. The control plane control unit provides information derived from the parameter to a user plane control unit (e.g. CU-UP) of the access network, wherein the information relates to transport resources for the user plane for the session, and wherein the transport resources relate to a logical transport network to use to carry the user plane of the session. Based on the received information, the user plane control unit derives the transport resources to be used for the session over the user plane, and exchanges user plane traffic for the session over the derived transport resources.

It is to be understood that the above description is illustrative of the invention and is not to be construed as limiting the invention. Various modifications and applications may occur to those skilled in the art without departing from the true scope of the invention as defined by the appended claims.

## Claims

1. A method for use by a first function (31) of a core network of a communication network system, the first function operating in a control plane, the method comprising:
deriving (S110) a network instance parameter relating to transport resources for a user plane from a network slice identifier of a packet data unit session relating to logical network resources of the packet data unit session between a user equipment (10) and a data network (40),
providing (S120) the network instance parameter to a second function (32) of the core network and requesting the second function of the core network to exchange user plane traffic for the session based on the parameter,
wherein the second function operates in the user plane and derives the transport resources for the session based on the parameter; and
providing (S130) the network instance parameter to a first control unit (21) of an access network (20) of the communication network system,
wherein the access network provides access for the user equipment to the communication network system and the first control unit of the access network operates in the control plane.

2. The method of claim 1, the providing comprising:
forwarding the network instance parameter in the control plane in a container from the first function of the core network to the first control unit of the access network via a third function of the core network, the third function of the core network operating in the control plane,
wherein the container is passed over a first interface between the third function of the core network and the first control unit of the access network transparently for the third function of the core network.

3. The method of claim 1 or 2, the providing comprising:
forwarding the network instance parameter in the control plane together with other information of user plane resources to be used for the session,
wherein these user plane resources are used on a second interface between the second function and a second control unit of the access network,
and wherein the second control unit operates in the user plane.

4. A method for use by a first control unit (21) of an access network (20) of a communication network system,
wherein the access network provides access for a user equipment (10) to the communication network system and the first control unit operates in a control plane, the method comprising:
acquiring a network instance parameter from a first function (31) of a core network of the communication network system, the first function operating in the control plane,
wherein the network instance parameter is mapped to a network slice identifier of a packet data unit session relating to logical network resources of a packet data unit session
providing (S210) said network instance parameter to a second control unit (22) of the access network, wherein the network instance parameter relates to transport resources for a user plane for the packet data unit session between the user equipment and a data network (40),
wherein the second control unit operates in the user plane,
and wherein the transport resources relate to a logical transport network to use to carry the user plane of the packet data unit session; and
requesting (S220) the second control unit to exchange user plane traffic for the packet data unit session over transport resources derived from said network instance parameter.

5. The method of claim 4, the acquiring comprising:
receiving the network instance parameter from the first function via a third function of the core network in the control plane in a container, the third function operating in the control plane,
wherein the container is received over a first interface between the third function and the first control unit transparently for the third function.

6. The method of claim 4 or 5, the acquiring comprising:
receiving the network instance parameter in the control plane together with other information of user plane resources to be used for the session,
wherein these user plane resources are used on a second interface between a second function of the core network and the second control unit of the access network,
and wherein the second function operates in the user plane and derives the transport resources for the session based on the parameter.

7. A method for use by a second control unit (22) of an access network (20) of a communication network system,
wherein the access network provides access for a user equipment (10) to the communication network system and the second control unit operates in a user plane, the method comprising:
receiving (S310) a network instance parameter from a first control unit (21) of the access network, wherein the network instance parameter relates to transport resources for the user plane for a packet data unit session between the user equipment and a data network (40), and
wherein the network instance parameter is mapped to a network slice identifier of the packet data unit session relating to logical network resources of the packet data unit session,
wherein the first control unit operates in the control plane,
and wherein the transport resources relate to the logical network resources of the packet data unit session; and
deriving, based on the received network instance parameter, the transport resources to be used for the packet data unit session over the user plane, and exchanging (S320) user plane traffic for the packet data unit session over the derived transport resources.

8. The method of any one of claims 1 to 7,
wherein the core network comprises a fifth generation core network;
and/or
the access network comprises at least one of a next generation access network and a next generation radio access network; and/or
the first function comprises a session management function; and/or
the second function comprises a user plane function; and/or
the third function comprises an access and mobility management function; and/or
the first control unit comprises a control plane entity terminating an N2 interface with the core network; and/or
the first control unit comprises a control plane control unit of a gNodeB; and/or
the second control unit comprises a user plane entity terminating an N3 interface with the core network; and/or
the second control unit comprises a user plane control unit of a gNodeB; and/or
the first interface comprises an N2 interface; and/or
the second interface comprises an N3 interface; and/or
the information is provided between the first control unit and the second control unit over an E1 interface; and/or
an interface between the first function and the second function comprises an N4 interface; and/or
the logical network resources comprise a network slice and/or a data network name; and/or
the network slice identifier comprises single network slice selection assistance information .

9. A non-transitory computer readable medium comprising program instructions stored thereon for performing the method of any one of claims 1 to 8.

10. An apparatus (310) configured to implement a first function (31) of a core network of a communication network system, the first function operating in a control plane, the apparatus comprising at least one processor (311) and at least one memory (312) including computer program code, the at least one memory and the computer program code configured to, with the at least one processor, cause the apparatus at least to perform:
deriving a network instance parameter relating to transport resources for a user plane from a network slice identifier of a packet data unit session relating to logical network resources of the packet data unit session between a user equipment and a data network,
providing the network instance parameter to a second function of the core network and requesting the second function of the core network to exchange user plane traffic for the session based on the parameter,
wherein the second function operates in the user plane and derives the transport resources for the session based on the parameter; and
providing the network instance parameter to a first control unit of an access network of the communication network system,
wherein the access network provides access for the user equipment to the communication network system and the first control unit of the access network operates in the control plane.

11. An apparatus (210) configured to implement a first control unit of an access network (20) of a communication network system,
wherein the access network is configured to provide access for a user equipment to the communication network system and the first control unit is configured to operate in a control plane, the apparatus comprising at least one processor (211) and at least one memory (212) including computer program code, the at least one memory and the computer program code configured to, with the at least one processor, cause the apparatus at least to perform:
acquiring a network instance parameter from a first function of a core network of the communication network system, the first function operating in the control plane,
wherein the parameter network instance is mapped to a network slice identifier of a packet data unit session relating to logical network resources of the packet data unit session,
providing said network instance parameter to a second control unit of the access network,
wherein the network instance parameter relates to transport resources for a user plane for the packet data unit session between the user equipment and a data network,
wherein the second control unit operates in the user plane,
and wherein the transport resources relate to a logical transport network to use to carry the user plane of the packet data unit session; and
requesting the second control unit to exchange user plane traffic for the packet data unit session over transport resources derived from said network instance parameter.

12. An apparatus (220) configured to implement a second control unit of an access network (20) of a communication network system, wherein the access network is configured to provide access for a user equipment to the communication network system and the second control unit is configured to operate in a user plane, the apparatus comprising at least one processor (221) and at least one memory (222) including computer program code, the at least one memory and the computer program code configured to, with the at least one processor, cause the apparatus at least to perform:
receiving a network instance parameter from a first control unit of the access network, wherein the network instance parameter relates to transport resources for the user plane for a packet data unit session between the user equipment and a data network, and wherein the network instance parameter is mapped to a network slice identifier of the packet data unit session relating to logical network resources of the packet data unit session,
wherein the first control unit operates in the control plane,
and wherein the transport resources relate to the logical network resources of the packet data unit session;
and
deriving, based on the received network instance parameter, the transport resources to be used for the packet data unit session over the user plane, and exchanging user plane traffic for the packet data unit session over the derived transport resources.

13. The apparatus of any one of claims 10 to 12,
wherein the core network comprises a fifth generation core network; and/or
the access network comprises at least one of a next generation access network and a next generation radio access network; and/or
the first function comprises a session management function; and/or the second function comprises a user plane function; and/or
the third function comprises an access and mobility management function; and/or
the first control unit comprises a control plane entity terminating an N2 interface with the core network; and/or
the first control unit comprises a control plane control unit of a gNodeB; and/or
the second control unit comprises a user plane entity terminating an N3 interface with the core network; and/or
the second control unit comprises a user plane control unit of a gNodeB; and/or
the first interface comprises an N2 interface; and/or
the second interface comprises an N3 interface; and/or
the information is provided between the first control unit and the second control unit over an E1 interface; and/or
an interface between the first function and the second function comprises an N4 interface; and/or
the logical network resources comprise a network slice and/or a data network name; and/or
the network slice identifier comprises single network slice selection assistance information.

## Patentansprüche

1. Verfahren zur Verwendung, durch eine erste Funktion (31), eines Kernnetzwerks eines Kommunikationsnetzwerksystems, wobei die erste Funktion in einer Steuerebene arbeitet, wobei das Verfahren umfasst:
Ableiten (S110) eines Netzwerkinstanzparameters bezüglich Transportressourcen für eine Benutzerebene aus einer Netzwerk-Slice-Kennung einer Sitzung einer Paketdateneinheit bezüglich logischer Netzwerkressourcen der Sitzung einer Paketdateneinheit zwischen einem Endgerät (10) und einem Datennetzwerk (40),
Bereitstellen (S120) des Netzwerkinstanzparameters für eine zweite Funktion (32) des Kernnetzwerks, und Auffordern der zweiten Funktion des Kernnetzwerks, Benutzerebenenverkehr für die Sitzung basierend auf dem Parameter auszutauschen,
wobei die zweite Funktion in der Benutzerebene arbeitet und die Transportressourcen für die Sitzung basierend auf dem Parameter ableitet; und
Bereitstellen (S130) des Netzwerkinstanzparameters für eine erste Steuereinheit (21) eines Zugangsnetzwerks (20) des Kommunikationsnetzwerksystems,
wobei das Zugangsnetzwerk Zugang für das Endgerät zu dem Kommunikationsnetzwerksystem bereitstellt und die erste Steuereinheit des Zugangsnetzwerks in der Steuerebene arbeitet.

2. Verfahren nach Anspruch 1, wobei das Bereitstellen umfasst:
Weiterleiten des Netzwerkinstanzparameters in der Steuerebene in einem Container von der ersten Funktion des Kernnetzwerks zu der ersten Steuereinheit des Zugangsnetzwerks anhand einer dritten Funktion des Kernnetzwerks, wobei die dritte Funktion des Kernnetzwerks in der Steuerebene arbeitet,
wobei der Container über eine erste Schnittstelle zwischen der dritten Funktion des Kernnetzwerks und der ersten Steuereinheit des Zugangsnetzwerks für die dritte Funktion des Kernnetzwerks transparent übermittelt wird.

3. Verfahren nach Anspruch 1 oder 2, wobei das Bereitstellen umfasst:
Weiterleiten des Netzwerkinstanzparameters in der Steuerebene zusammen mit anderen Informationen von Benutzerebenenressourcen, die für die Sitzung zu verwenden sind,
wobei diese Benutzerebenenressourcen an einer zweiten Schnittstelle zwischen der zweiten Funktion und einer zweiten Steuereinheit des Zugangsnetzwerks verwendet werden,
und wobei die zweite Steuereinheit in der Benutzerebene arbeitet.

4. Verfahren zur Verwendung durch eine erste Steuereinheit (21) eines Zugangsnetzwerks (20) eines Kommunikationsnetzwerksystems,
wobei das Zugangsnetzwerk Zugang für ein Endgerät (10) zu dem Kommunikationsnetzwerksystem gibt, und die erste Steuereinheit in einer Steuerebene arbeitet, wobei das Verfahren umfasst:
Erfassen eines Netzwerkinstanzparameters aus einer ersten Funktion (31) eines Kernnetzwerks des Kommunikationsnetzwerksystems, wobei die erste Funktion in der Steuerebene arbeitet,
wobei der Netzwerkinstanzparameter auf eine Netzwerk-Slice-Kennung einer Sitzung einer Paketdateneinheit bezüglich logischer Netzwerkressourcen einer Sitzung einer Paketdateneinheit abgebildet wird,
Bereitstellen (S210) des Netzwerkinstanzparameters für eine zweite Steuereinheit (22) des Zugangsnetzwerks, wobei der Netzwerkinstanzparameter Transportressourcen für eine Benutzerebene für die Sitzung einer Paketdateneinheit zwischen dem Endgerät und einem Datennetzwerk (40) betrifft,
wobei die zweite Steuereinheit in der Benutzerebene arbeitet,
und wobei die Transportressourcen ein logisches Transportnetzwerk betreffen, das zu verwenden ist, um die Benutzerebene der Sitzung einer Paketdateneinheit zu übertragen; und
Auffordern (S220) der zweiten Steuereinheit, den Benutzerebenenverkehr für die Sitzung einer Paketdateneinheit über Transportressourcen, die aus dem Netzwerkinstanzparameter abgeleitet werden, auszutauschen.

5. Verfahren nach Anspruch 4, wobei das Erfassen umfasst:
Empfangen des Netzwerkinstanzparameters aus der ersten Funktion anhand einer dritten Funktion des Kernnetzwerks in der Steuerebene in einem Container, wobei die dritte Funktion in der Steuerebene arbeitet,
wobei der Container über eine erste Schnittstelle zwischen der dritten Funktion und der ersten Steuereinheit für die dritte Funktion transparent empfangen wird.

6. Verfahren nach Anspruch 4 oder 5, wobei das Erfassen umfasst:
Empfangen des Netzwerkinstanzparameters in der Steuerebene zusammen mit anderen Informationen von Benutzerebenenressourcen, die für die Sitzung zu verwenden sind,
wobei diese Benutzerebenenressourcen an einer zweiten Schnittstelle zwischen einer zweiten Funktion des Kernnetzwerks und der zweiten Steuereinheit des Zugangsnetzwerks verwendet werden,
und wobei die zweite Funktion in der Benutzerebene arbeitet und die Transportressourcen für die Sitzung basierend auf dem Parameter ableitet.

7. Verfahren zur Verwendung, durch eine zweite Steuereinheit (22), eines Zugangsnetzwerks (20) eines Kommunikationsnetzwerksystems,
wobei das Zugangsnetzwerk Zugang für ein Endgerät (10) zu dem Kommunikationsnetzwerksystem bereitstellt und die zweite Steuereinheit in einer Benutzerebene arbeitet, wobei das Verfahren umfasst:
Empfangen (S310) eines Netzwerkinstanzparameters von einer ersten Steuereinheit (21) des Zugangsnetzwerks, wobei der Netzwerkinstanzparameter Transportressourcen für die Benutzerebene für eine Sitzung einer Paketdateneinheit zwischen dem Endgerät und einem Datennetzwerk (40) betrifft, und
wobei der Netzwerkinstanzparameter auf eine Netzwerk-Slice-Kennung der Sitzung einer Paketdateneinheit bezüglich logischer Netzwerkressourcen der Sitzung einer Paketdateneinheit abgebildet wird,
wobei die erste Steuereinheit in der Steuerebene arbeitet,
und wobei die Transportressourcen die logischen Netzwerkressourcen der Sitzung einer Paketdateneinheit betreffen; und
Ableiten, basierend auf dem empfangenen Netzwerkinstanzparameter, der Transportressourcen, die für die Sitzung einer Paketdateneinheit über die Benutzerebene zu verwenden sind, und Austauschen (S320) von Benutzerebenenverkehr für die Sitzung einer Paketdateneinheit über die abgeleiteten Transportressourcen.

8. Verfahren nach einem der Ansprüche 1 bis 7,
wobei das Kernnetzwerk ein Kernnetzwerk der fünften Generation umfasst; und/oder
das Zugangsnetzwerk mindestens eines von einem Zugangsnetzwerk der nächsten Generation und einem Funkzugangsnetzwerk der nächsten Generation umfasst; und/oder
die erste Funktion eine Sitzungsverwaltungsfunktion umfasst; und/oder
die zweite Funktion eine Benutzerebenenfunktion umfasst; und/oder
die dritte Funktion eine Zugangs- und Mobilitätsverwaltungsfunktion umfasst; und/oder
die erste Steuereinheit eine Steuerebenenentität umfasst, die eine N2-Schnittstelle mit dem Kernnetzwerk beendet; und/oder
die erste Steuereinheit eine Steuerebenen-Steuereinheit eines gNodeB umfasst; und/oder
die zweite Steuereinheit eine Benutzerebenenentität umfasst, die eine N3-Schnittstelle mit dem Kernnetzwerk beendet; und/oder
die zweite Steuereinheit eine Benutzerebenen-Steuereinheit eines gNodeB umfasst; und/oder
die erste Schnittstelle eine N2-Schnittstelle umfasst; und/oder
die zweite Schnittstelle eine N3-Schnittstelle umfasst; und/oder
die Informationen zwischen der ersten Steuereinheit und der zweiten Steuereinheit über eine E1-Schnittstelle bereitgestellt werden; und/oder
eine Schnittstelle zwischen der ersten Funktion und der zweiten Funktion eine N4-Schnittstelle umfasst; und/oder
die logischen Netzwerkressourcen einen Netzwerk-Slice und/oder einen Datennetzwerknamen umfassen; und/oder
die Netzwerk-Slice-Kennung Hilfsinformationen zur Auswahl eines einzelnen Netzwerk-Slice umfasst.

9. Nicht vorübergehendes computerlesbares Medium, auf dem Programmanweisungen gespeichert sind, um das Verfahren nach einem der Ansprüche 1 bis 8 auszuführen.

10. Gerät (310), das dazu konfiguriert ist, eine erste Funktion (31) eines Kernnetzwerks eines Kommunikationsnetzwerksystems umzusetzen, wobei die erste Funktion in einer Steuerebene arbeitet, wobei das Gerät mindestens einen Prozessor (311) und mindestens einen Computerprogrammcode umfassenden Speicher (312) umfasst, wobei der mindestens eine Speicher und der Computerprogrammcode dazu konfiguriert sind, mit dem mindestens einen Prozessor zu bewirken, dass das Gerät mindestens Folgendes ausführt:
Ableiten eines Netzwerkinstanzparameters bezüglich Transportressourcen für eine Benutzerebene aus einer Netzwerk-Slice-Kennung einer Sitzung einer Paketdateneinheit bezüglich logischer Netzwerkressourcen der Sitzung einer Paketdateneinheit zwischen einem Endgerät und einem Datennetzwerk,
Bereitstellen des Netzwerkinstanzparameters für eine zweite Funktion des Kernnetzwerks, und Auffordern der zweiten Funktion, den Benutzerebenenverkehr für die Sitzung basierend auf dem Parameter auszutauschen,
wobei die zweite Funktion in der Benutzerebene arbeitet und die Transportressourcen für die Sitzung basierend auf dem Parameter ableitet; und
Bereitstellen des Netzwerkinstanzparameters für eine erste Steuereinheit eines Zugangsnetzwerks des Kommunikationsnetzwerksystems,
wobei das Zugangsnetzwerk Zugang für die Endgerät zu dem Kommunikationsnetzwerksystem bereitstellt, und die erste Steuereinheit des Zugangsnetzwerks in der Steuerebene arbeitet.

11. Gerät (210), das dazu konfiguriert ist, eine erste Steuereinheit eines Zugangsnetzwerks (20) eines Kommunikationsnetzwerksystems umzusetzen,
wobei das Zugangsnetzwerk dazu konfiguriert ist, Zugang für ein Endgerät zu dem Kommunikationsnetzwerksystem bereitzustellen, und die erste Steuereinheit dazu konfiguriert ist, in einer Steuerebene zu arbeiten, wobei das Gerät mindestens einen Prozessor (211) und mindestens einen Computerprogrammcode umfassenden Speicher (212) umfasst, wobei der mindestens eine Speicher und der Computerprogrammcode dazu konfiguriert sind, mit dem mindestens einen Prozessor zu bewirken, dass das Gerät mindestens Folgendes ausführt:
Erfassen eines Netzwerkinstanzparameters aus einer ersten Funktion eines Kernnetzwerks des Kommunikationsnetzwerksystems, wobei die erste Funktion in der Steuerebene arbeitet,
wobei die Parameternetzwerkinstanz auf eine Netzwerk-Slice-Kennung einer Sitzung einer Paketdateneinheit bezüglich logischer Netzwerkressourcen der Sitzung einer Paketdateneinheit abgebildet ist,
Bereitstellen des Netzwerkinstanzparameters für eine zweite Steuereinheit des Zugangsnetzwerks,
wobei der Netzwerkinstanzparameter Transportressourcen für eine Benutzerebene für die Sitzung einer Paketdateneinheit zwischen dem Endgerät und einem Datennetzwerk betrifft,
wobei die zweite Steuereinheit in der Benutzerebene arbeitet,
und wobei die Transportressourcen ein logisches Transportnetzwerk betreffen, das zu verwenden ist, um die Benutzerebene der Sitzung einer Paketdateneinheit zu übertragen; und
Auffordern der zweiten Steuereinheit, Benutzerebenenverkehr für die Sitzung einer Paketdateneinheit über Transportressourcen, die aus dem Netzwerkinstanzparameter abgeleitet werden, auszutauschen.

12. Gerät (220), das dazu konfiguriert ist, eine zweite Steuereinheit eines Zugangsnetzwerks (20) eines Kommunikationsnetzwerksystems umzusetzen,
wobei das Zugangsnetzwerk dazu konfiguriert ist, Zugang für ein Endgerät zu dem Kommunikationsnetzwerksystem bereitzustellen, und die zweite Steuereinheit dazu konfiguriert ist, in einer Benutzerebene zu arbeiten, wobei das Gerät mindestens einen Prozessor (221) und mindestens einen Computerprogrammcode umfassenden Speicher (222) umfasst, wobei der mindestens eine Speicher und der Computerprogrammcode dazu konfiguriert sind, mit dem mindestens einen Prozessor zu bewirken, dass das Gerät mindestens Folgendes ausführt:
Empfangen eines Netzwerkinstanzparameters von einer ersten Steuereinheit des Zugangsnetzwerks, wobei der Netzwerkinstanzparameter Transportressourcen für die Benutzerebene für eine Sitzung einer Paketdateneinheit zwischen dem Endgerät und einem Datennetzwerk betrifft, und wobei der Netzwerkinstanzparameter auf eine Netzwerk-Slice-Kennung der Sitzung einer Paketdateneinheit bezüglich logischer Netzwerkressourcen der Sitzung einer Paketdateneinheit abgebildet ist,
wobei die erste Steuereinheit in der Steuerebene arbeitet,
und wobei die Transportressourcen die logischen Netzwerkressourcen der Sitzung einer Paketdateneinheit betreffen; und
Ableiten, basierend auf dem empfangenen Netzwerkinstanzparameter, der Transportressourcen, die für die Sitzung einer Paketdateneinheit über die Benutzerebene zu verwenden sind, und Austauschen von Benutzerebenenverkehr für die Sitzung einer Paketdateneinheit über die abgeleiteten Transportressourcen.

13. Gerät nach einem der Ansprüche 10 bis 12,
wobei das Kernnetzwerk ein Kernnetzwerk der fünften Generation umfasst; und/oder
das Zugangsnetzwerk mindestens eines von einem Zugangsnetzwerk der nächsten Generation und einem Funkzugangsnetzwerk der nächsten Generation umfasst; und/oder
die erste Funktion eine Sitzungsverwaltungsfunktion umfasst; und/oder
die zweite Funktion eine Benutzerebenenfunktion umfasst; und/oder
die dritte Funktion eine Zugangs- und Mobilitätsverwaltungsfunktion umfasst; und/oder
die erste Steuereinheit eine Steuerebenenentität umfasst, die eine N2-Schnittstelle mit dem Kernnetzwerk beendet; und/oder
die erste Steuereinheit eine Steuerebenen-Steuereinheit eines gNodeB umfasst; und/oder
die zweite Steuereinheit eine Benutzerebenenentität, die eine N3-Schnittstelle mit dem Kernnetzwerk beendet, umfasst; und/oder
die zweite Steuereinheit eine Benutzerebenen-Steuereinheit eines gNodeB umfasst; und/oder
die erste Schnittstelle eine N2-Schnittstelle umfasst; und/oder
die zweite Schnittstelle eine N3-Schnittstelle umfasst; und/oder
die Informationen zwischen der ersten Steuereinheit und der zweiten Steuereinheit über eine E1-Schnittstelle bereitgestellt werden; und/oder
eine Schnittstelle zwischen der ersten Funktion und der zweiten Funktion eine N4-Schnittstelle umfasst; und/oder
die logischen Netzwerkressourcen einen Netzwerk-Slice und/oder einen Datennetzwerknamen umfassen; und/oder
die Netzwerk-Slice-Kennung Hilfsinformationen zur Auswahl eines einzelnen Netzwerk-Slice umfassen.

## Revendications

1. Procédé destiné à être utilisé par une première fonction (31) d'un réseau central d'un système de réseau de communication, la première fonction opérant dans un plan de pilotage, le procédé comprenant :
la dérivation (S110) d'un paramètre d'instance de réseau relatif à des ressources de transport pour un plan utilisateur à partir d'un identifiant de tranche de réseau d'une session d'unité de données de paquet relative à des ressources de réseau logique de la session d'unité de données de paquet entre un équipement utilisateur (10) et un réseau de données (40),
la fourniture (S120) du paramètre d'instance de réseau à une deuxième fonction (32) du réseau central et le fait de requérir de la deuxième fonction du réseau central qu'elle échange un trafic de plan utilisateur pour la session sur la base du paramètre,
dans lequel la deuxième fonction opère dans le plan utilisateur et dérive les ressources de transport pour la session sur la base du paramètre; et
la fourniture (S130) du paramètre d'instance de réseau à une première unité de pilotage (21) d'un réseau d'accès (20) du système de réseau de communication,
dans lequel le réseau d'accès fournit un accès pour l'équipement utilisateur au système de réseau de communication et la première unité de pilotage du réseau d'accès opère dans le plan de pilotage.

2. Procédé selon la revendication 1, la fourniture comprenant :
la retransmission du paramètre d'instance de réseau dans le plan de pilotage dans un contenant à partir de la première fonction du réseau central à la première unité de pilotage du réseau d'accès via une troisième fonction du réseau central, la troisième fonction du réseau central opérant dans le plan de pilotage,
dans lequel le contenant est passé par le biais d'une première interface entre la troisième fonction du réseau central et la première unité de pilotage du réseau d'accès de façon transparente pour la troisième fonction du réseau central.

3. Procédé selon la revendication 1 ou 2, la fourniture comprenant :
la retransmission du paramètre d'instance de réseau dans le plan de pilotage ensemble avec d'autres informations de ressources de plan utilisateur à utiliser pour la session,
dans lequel ces ressources de plan utilisateur sont utilisées sur une seconde interface entre la deuxième fonction et une seconde unité de pilotage du réseau d'accès,
et dans lequel la seconde unité de pilotage opère dans le plan utilisateur.

4. Procédé destiné à être utilisé par une première unité de pilotage (21) d'un réseau d'accès (20) d'un système de réseau de communication,
dans lequel le réseau d'accès fournit un accès pour un équipement utilisateur (10) au système de réseau de communication et la première unité de pilotage opère dans un plan de pilotage, le procédé comprenant :
l'acquisition d'un paramètre d'instance de réseau à partir d'une première fonction (31) d'un réseau central du système de réseau de communication, la première fonction opérant dans le plan de pilotage,
dans lequel le paramètre d'instance de réseau est mis en correspondance avec un identifiant de tranche de réseau d'une session d'unité de données de paquet relative à des ressources de réseau logique d'une session d'unité de données de paquet,
la fourniture (S210) dudit paramètre d'instance de réseau à une seconde unité de pilotage (22) du réseau central, dans lequel le paramètre d'instance de réseau est relatif à des ressources de transport pour un plan utilisateur pour la session d'unité de données de paquet entre l'équipement utilisateur et un réseau de données (40),
dans lequel la seconde unité de pilotage opère dans le plan utilisateur,
et dans lequel les ressources de transport sont relatives à un réseau de transport logique à utiliser pour porter le plan utilisateur de la session d'unité de données de paquet; et
le fait de requérir (S220) de la seconde unité de pilotage qu'elle échange un trafic de plan utilisateur pour la session d'unité de données de paquet par le biais de ressources de transport dérivées à partir dudit paramètre d'instance de réseau.

5. Procédé selon la revendication 4, l'acquisition comprenant :
la réception du paramètre d'instance de réseau à partir de la première fonction via une troisième fonction du réseau central dans le plan de pilotage dans un contenant, la troisième fonction du réseau central opérant dans le plan de pilotage,
dans lequel le contenant est reçu par le biais d'une première interface entre la troisième fonction et la première unité de pilotage de façon transparente pour la troisième fonction.

6. Procédé selon la revendication 4 ou 5, l'acquisition comprenant :
la réception du paramètre d'instance de réseau dans le plan de pilotage ensemble avec d'autres informations de ressources de plan utilisateur à utiliser pour la session,
dans lequel ces ressources de plan utilisateur sont utilisées sur une seconde interface entre une deuxième fonction du réseau central et la seconde unité de pilotage du réseau d'accès,
et dans lequel la deuxième fonction opère dans le plan utilisateur et dérive les ressources de transport pour la session sur la base du paramètre.

7. Procédé destiné à être utilisé par une seconde unité de pilotage (22) d'un réseau d'accès (20) d'un système de réseau de communication,
dans lequel le réseau d'accès fournit un accès pour un équipement utilisateur (10) au système de réseau de communication et la seconde unité de pilotage opère dans un plan de pilotage, le procédé comprenant :
la réception (S310) d'un paramètre d'instance de réseau à partir d'une première unité de pilotage (21) du réseau central, dans lequel le paramètre d'instance de réseau est relatif à des ressources de transport pour le plan utilisateur pour une session d'unité de données de paquet entre l'équipement utilisateur et un réseau de données (40), et
dans lequel le paramètre d'instance de réseau est mis en correspondance avec un identifiant de tranche de réseau de la session d'unité de données de paquet relative à des ressources de réseau logique de la session d'unité de données de paquet,
dans lequel la première unité de pilotage opère dans le plan de pilotage,
et dans lequel les ressources de transport sont relatives aux ressources de réseau logique de la session d'unité de données de paquet; et
la dérivation, sur la base du paramètre d'instance de réseau reçu, des ressources de transport à utiliser pour la session d'unité de données de paquet par le biais du plan utilisateur, et
l'échange (S320) d'un trafic de plan utilisateur pour la session d'unité de données de paquet par le biais des ressources de transport dérivées.

8. Procédé selon l'une quelconque des revendications 1 à 7,
dans lequel le réseau central comprend un réseau central de cinquième génération; et/ou
le réseau d'accès comprend au moins l'un parmi un réseau d'accès de nouvelle génération et un réseau d'accès radio de nouvelle génération; et/ou
la première fonction comprend une fonction de gestion de session; et/ou
la deuxième fonction comprend une fonction de plan utilisateur; et/ou
la troisième fonction comprend une fonction de gestion d'accès et de mobilité; et/ou
la première unité de pilotage comprend une entité de plan de pilotage terminant une interface N2 avec le réseau central ; et/ou
la première unité de pilotage comprend une unité de pilotage de plan de pilotage d'un gNodeB ; et/ou
la seconde unité de pilotage comprend une entité de plan utilisateur terminant une interface N3 avec le réseau central ; et/ou
la seconde unité de pilotage comprend une unité de pilotage de plan utilisateur d'un gNodeB ; et/ou
la première interface comprend une interface N2 ; et/ou
la seconde interface comprend une interface N3 ; et/ou
l'information est fournie entre la première unité de pilotage et la seconde unité de pilotage par le biais d'une interface E1; et/ou
une interface entre la première fonction et la deuxième fonction comprend une interface N4 ; et/ou
les ressources de réseau logique comprennent une tranche de réseau et/ou un nom de réseau de données; et/ou
l'identifiant de tranche de réseau comprend une information d'aide à la sélection de tranche de réseau unique.

9. Support lisible par ordinateur non transitoire comprenant des instructions de programme stockées sur celui-ci pour réaliser le procédé selon l'une quelconque des revendications 1 à 8.

10. Appareil (310) configuré pour mettre en œuvre une première fonction (31) d'un réseau central d'un système de réseau de communication, la première fonction opérant dans un plan de pilotage, l'appareil comprenant au moins un processeur (311) et au moins une mémoire (312) incluant un code de programme informatique, la au moins une mémoire et le code de programme informatique configurés pour, avec le au moins un processeur, amener l'appareil au moins à réaliser :
la dérivation d'un paramètre d'instance de réseau relatif à des ressources de transport pour un plan utilisateur à partir d'un identifiant de tranche de réseau d'une session d'unité de données de paquet relative à des ressources de réseau logique de la session d'unité de données de paquet entre un équipement utilisateur et un réseau de données,
la fourniture du paramètre d'instance de réseau à une deuxième fonction du réseau central et le fait de requérir de la deuxième fonction du réseau central qu'elle échange un trafic de plan utilisateur pour la session sur la base du paramètre,
dans lequel la deuxième fonction opère dans le plan utilisateur et dérive les ressources de transport pour la session sur la base du paramètre; et
la fourniture du paramètre d'instance de réseau à une première unité de pilotage d'un réseau d'accès du système de réseau de communication,
dans lequel le réseau d'accès fournit un accès pour l'équipement utilisateur au système de réseau de communication et la première unité de pilotage du réseau d'accès opère dans le plan de pilotage.

11. Appareil (210) configuré pour mettre en œuvre une première unité de pilotage d'un réseau d'accès (20) d'un système de réseau de communication,
dans lequel le réseau d'accès est configuré pour fournir un accès pour un équipement utilisateur au système de réseau de communication et la première unité de pilotage est configurée pour opérer dans un plan de pilotage, l'appareil comprenant au moins un processeur (211) et au moins une mémoire (212) incluant un code de programme informatique, la au moins une mémoire et le code de programme informatique configurés pour, avec le au moins un processeur, amener l'appareil au moins à réaliser :
l'acquisition d'un paramètre d'instance de réseau à partir d'une première fonction d'un réseau central du système de réseau de communication, la première fonction opérant dans le plan de pilotage,
dans lequel l'instance de réseau de paramètre est mis en correspondance avec un identifiant de tranche de réseau d'une session d'unité de données de paquet relative à des ressources de réseau logique de la session d'unité de données de paquet,
la fourniture dudit paramètre d'instance de réseau à une seconde unité de pilotage du réseau central,
dans lequel le paramètre d'instance de réseau est relatif à des ressources de transport pour un plan utilisateur pour la session d'unité de données de paquet entre l'équipement utilisateur et un réseau de données,
dans lequel la seconde unité de pilotage opère dans le plan utilisateur,
et dans lequel les ressources de transport sont relatives à un réseau de transport logique à utiliser pour porter le plan utilisateur de la session d'unité de données de paquet; et
le fait de requérir de la seconde unité de pilotage qu'elle échange un trafic de plan utilisateur pour la session d'unité de données de paquet par le biais de ressources de transport dérivées à partir dudit paramètre d'instance de réseau.

12. Appareil (220) configuré pour mettre en œuvre une seconde unité de pilotage d'un réseau d'accès (20) d'un système de réseau de communication,
dans lequel le réseau d'accès est configuré pour fournir un accès pour un équipement utilisateur au système de réseau de communication et la seconde unité de pilotage est configurée pour opérer dans un plan utilisateur, l'appareil comprenant au moins un processeur (221) et au moins une mémoire (222) incluant un code de programme informatique, la au moins une mémoire et le code de programme informatique configurés pour, avec le au moins un processeur, amener l'appareil au moins à réaliser :
la réception d'un paramètre d'instance de réseau à partir d'une première unité de pilotage du réseau central, dans lequel le paramètre d'instance de réseau est relatif à des ressources de transport pour le plan utilisateur pour une session d'unité de données de paquet entre l'équipement utilisateur et un réseau de données, et dans lequel le paramètre d'instance de réseau est mis en correspondance avec un identifiant de tranche de réseau de la session d'unité de données de paquet relative à des ressources de réseau logique de la session d'unité de données de paquet,
dans lequel la première unité de pilotage opère dans le plan de pilotage,
et dans lequel les ressources de transport sont relatives aux ressources de réseau logique de la session d'unité de données de paquet;
et
la dérivation, sur la base du paramètre d'instance de réseau reçu, des ressources de transport à utiliser pour la session d'unité de données de paquet par le biais du plan utilisateur, et
l'échange d'un trafic de plan utilisateur pour la session d'unité de données de paquet par le biais des ressources de transport dérivées.

13. Appareil selon l'une quelconque des revendications 10 à 12,
dans lequel le réseau central comprend un réseau central de cinquième génération; et/ou
le réseau d'accès comprend au moins l'un parmi un réseau d'accès de nouvelle génération et un réseau d'accès radio de nouvelle génération; et/ou
la première fonction comprend une fonction de gestion de session; et/ou
la deuxième fonction comprend une fonction de plan utilisateur; et/ou
la troisième fonction comprend une fonction de gestion d'accès et de mobilité; et/ou
la première unité de pilotage comprend une entité de plan de pilotage terminant une interface N2 avec le réseau central ; et/ou
la première unité de pilotage comprend une unité de pilotage de plan de pilotage d'un gNodeB ; et/ou
la seconde unité de pilotage comprend une entité de plan utilisateur terminant une interface N3 avec le réseau central ; et/ou
la seconde unité de pilotage comprend une unité de pilotage de plan utilisateur d'un gNodeB ; et/ou
la première interface comprend une interface N2 ; et/ou
la seconde interface comprend une interface N3 ; et/ou
l'information est fournie entre la première unité de pilotage et la seconde unité de pilotage par le biais d'une interface E1; et/ou
une interface entre la première fonction et la deuxième fonction comprend une interface N4 ; et/ou
les ressources de réseau logique comprennent une tranche de réseau et/ou un nom de réseau de données; et/ou
l'identifiant de tranche de réseau comprend une information d'aide à la sélection de tranche de réseau unique.
